# EUROPÄISCHE PATENTSCHRIFT

(11) **EP 0 344 424 B1**
(45) Veröffentlichungstag und Bekanntmachung des Hinweises auf die Patenterteilung: **15.12.1993**
(21) Anmeldenummer: 89105411.6
(22) Anmeldetag: 28.03.1989
(51) Int. Cl.: F16B 21/02, F16B 5/00, B23P 19/08, B25B 27/02

(54) **Drehverschluss**
Fastener locking by rotation
Attache verrouillante par rotation

(30) Priorität: 03.05.1988 DE 3814940
(43) Veröffentlichungstag der Anmeldung: 06.12.1989
(73) Patentinhaber: CAMLOC GmbH, D-65779 Kelkheim (DE)
(72) Erfinder: Hempel, Werner KEIL & SCHAAFHAUSEN Patentanwälte, D-60322 Frankfurt am Main (DE); Stölken, Jochen KEIL & SCHAAFHAUSEN Patentanwälte, D-60322 Frankfurt am Main (DE)
(74) Vertreter: Keil, Rainer A., Dipl.-Phys. Dr.

(56) Entgegenhaltungen:
- DE-U- 8 805 835
- US-A- 2 904 288
- US-A- 3 675 531
- US-A- 3 995 360
- Industrial Fasteners Handbook, 3rd Ed., The Trade & Technical Press Ltd., 1985, S. 361 bis 364

## Beschreibung

Die Erfindung bezieht sich auf einen Drehverschluß nach dem Oberbegriff des Anspruchs 1.

Ein derartiger Drehverschluß ist aus der US-A-3 675 531 bekannt. Er ist in seiner Montage jedoch verhältnismäßig aufwendig und hat den Nachteil, daß die äußere Nockenscheibe nur in einer bestimmten axialen Lage relativ zu dem Bolzenschaft festlegbar ist, weil der speziell ausgestaltete Federring mit seiner Innencontour an dem beidseits abgeflachten Bolzenschaft anliegt und mit seinen Innenrändern in eine in vorbestimmtem Abstand von dem Schaftende vorgesehene Nut eingreift, so daß die wirksame Bolzenlänge immer genau an die Gesamtdicke der miteinander zu verbindenden Bauteile angepaßt sein muß. Mit ein und demselben Drehverschluß lassen sich daher nur Bauteile verbinden, welche annähernd gleiche Gesamtdicke haben.

Aus Industrial Fasteners Handbook, 3rd Ed., The Trade & Technical Press Ltd., 1985, S. 361 bis 364 sind Federringe, die unter elastischem Ausweichen von nach innen gestellten Federzungen auf einen zylindrischen Schaft aufgeschoben und selbstklemmend gegen ein Abziehen darauf gehalten sind, an sich bekannt.

Aufgabe der vorliegenden Erfindung ist die Schaffung eines Drehverschlusses der gattungsgemäßen Art, welcher einfacher zu montieren und gleichzeitig für Bauteile unterschiedlicher Materialstärke einsetzbar ist.

Diese Aufgabe wird erfindungsgemäß im wesentlichen mit den Merkmalen des Anspruchs 1 gelöst. Hierdurch wird die Montage des Drehverschlusses sehr erleichtert. Zunächst wird der Verschlußbolzen durch das Loch des äußeren Bauteiles gesteckt; dann werden die Klemmhülse und die beiden Nockenscheiben auf den Bolzenschaft aufgeschoben. Auf das aus der äußeren Nockenscheibe herausragende freie zylindrische Ende des Bolzenschafts wird dann der selbstklemmende Federring aufgeschoben, um die äußere Nockenscheibe axial unverrückbar festzulegen. Derartige selbstklemmende Federringe sind unter der Bezeichnung 'Benzing-Ringe' im Handel; sie lassen sich unter elastischem Ausweichen ihrer nach innen gestellten Federzungen auf das freie Ende des Bolzenschaftes verhältnismäßig leicht aufschieben. Wegen der Schrägstellung der Federzungen nach dem Aufschieben läßt sich der Federring aber nicht ohne weiteres wieder in Gegenrichtung von dem Bolzenschaft abziehen. Die Selbstklemmung des Federringes auf den zylindrischen Endabschnitt ist so stark, daß von ihm verhältnismäßig hohe Axialkräfte aufgenommen werden können. Danach kann, wenn der Drehverschluß z.B. als Festverbinder dient, das innere Bauteil mit seinem größeren Loch über den aus der Rückseite des äußeren Bauteils herausragenden Teil des Drehverschlusses bis zur Anlage an die Innenseite des äußeren Bauteils geschoben und vermittels des formschlüssig an der äußeren Nockenscheibe angreifenden Verschlußbolzens die äußere Nockenscheibe gegenüber der inneren Nockenscheibe verdreht werden. Durch das Zusammenwirken der aneinanderliegenden Nockenflächen der Nockenscheiben bewegt sich die innere Nockenscheibe axial in Richtung des Bolzenkopfes und wirkt dadurch auf die Klemmhülse aus elastischem Material ein. Hierdurch baucht sich die Klemmhülse nach außen unter Bildung eines Klemmwulstes benachbart der Innenseite des inneren Bauteils aus. Die hierbei auftretenden axialen Kräfte können von dem Federring, an welchem sich die äußere Nockenscheibe axial abstützt, ohne weiteres aufgenommen werden. Mit Hilfe eines handelsüblichen Bauteils, dem Federring wird dadurch eine außerordentlich schnelle und sichere Montage des Drehverschlusses gewährleistet. Da die axiale Lage des Federringes auf dem Bolzenschaft über einen verhältnismäßig großen Bereich, nämlich die gesamte Länge des zylindrischen Endabschnitts des Bolzenschafts variieren kann, ist ein und derselbe Drehverschluß bei unterschiedlichen Materialstärken der zu verbindenden Bauteile einsetzbar. Der erfindungsgemäße Drehverschluß kann trotzdem erhebliche Kräfte aufnehmen, weil der Federring über einen großen Längenbereich mit seinen nach innen weisenden Federzungen über den gesamten Umfang des zylindrischen Endabschnitts an dem Bolzenschaft angreift. Wenn wenigstens die beiden Nocken und/oder wenigstens die äußere Nockenscheibe und der Federring jeweils zu einer Baueinheit untereinander verbunden sind, wird die Montage des Verschlusses an den miteinander zu verbindenden Bauteilen besonders erleichtert, da hierbei insgesamt wenigstens ein Bauteil weniger zu montieren ist. Die Verbindung von äußerer Nockenscheibe und Federring ist insbesondere dann von besonderem Vorteil, wenn die beiden Nockenscheiben bereits zu einer Baueinheit zusammengefaßt sind und umgekehrt, so daß für die Montage des erfundenen Drehverschlusses lediglich noch drei Teile, nämlich der Verschlußbolzen, die Klemmhülse und die Baueinheit aus den beiden Nockenscheiben und dem Federring gehandhabt werden müssen.

Die Verrastung der beiden Nockenscheiben kann bspw. nach Anspruch 2 ausgebildet sein. Vorzugsweise weist die Verrastung zwei diametral einander gegenüberliegende Rastzungen mit entsprechenden Rastnasen auf, welche in entsprechend zwei am Umfang der anderen Nockenscheibe diametral einander gegenüberliegend angeordnete Nuten geführt sind. Auf diese Weise werden die beiden Nockenscheiben noch zuverlässiger als Baueinheit zusammengehalten.

Mit dem Merkmal des Anspruchs 3 ist der Federring auf einfache Weise mit der äußeren Nockenscheibe zu einer Baueinheit zu vereinigen.

Ein weiterer Schritt der Vereinfachung der Montage wird mit der Erfindung dann erzielt, wenn die Weiterbildung nach Anspruch 4 vorgesehen ist. Dies ist insbesondere dann von besonderem Vorteil, wenn die beiden Nockenscheiben bereits untereinander und/oder die äußere Nockenscheibe mit dem Federring oder alle drei Bauteile bereits zu einer Baueinheit zusammengefaßt sind, so daß letztlich der gesamte Drehverschluß nur noch aus zwei für die Montage zu handhabenden Teilen besteht, nämlich dem Verschlußbolzen und der Baueinheit aus Klemmhülse, den beiden Nockenscheiben und dem Federring.

Um sicherzustellen, daß sich die innere Nockenscheibe beim Verdrehen der äußeren Nockenscheibe nicht mitdreht, kann das Merkmal des Anspruchs 5 vorgesehen sein. Diese Vertiefungen können im Material der Klemmhülse vorgeformt sein oder sich erst beim Zusammenspannen von Klemmhülse und innerer Nockenscheibe auf dem Verschlußbolzen aufgrund der Elastizität des Klemmhülsenmaterials durch Verformung ergeben. Die aus elastischem Material bestehende Klemmhülse, welche sich bei Betätigung der äußeren Nockenscheibe an die Innenseite des äußeren Bauteils und an das innere Bauteil anpreßt, wird aufgrund der dadurch auftretenden Reibungskräfte an einem Mitdrehen bei Betätigung des Verschlußbolzens gehindert.

Da die äußere Nockenscheibe mit Hilfe des Verschlußbolzens in Drehung versetzt und daher der Drehverschluß in seine Verschlußstellung gebracht wird, ist es von besonderem Vorteil, wenn die Drehkräfte von dem Bolzen möglichst großflächig und gleichmäßig auf die äußere Nockenscheibe übertragen werden. Dies wird mit dem Merkmal des Anspruchs 6 und ggf. des Anspruchs 7 erreicht.

Weitere Ziele, Vorteile, Merkmale und Anwendungsmöglichkeiten der vorliegenden Erfindung ergeben sich aus der nachfolgenden Beschreibung und Ausführungsbeispielen anhand der Zeichnung.

Es zeigen:
- Fig. 1: im Längsschnitt (der Verschlußbolzen ist nicht geschnitten) schematisch einen die Erfindung aufweisenden Drehverschluß,
- Fig. 2: eine stirnseitige Ansicht der äußeren Nockenscheibe aus Richtung II von Fig. 1 gesehen,
- Fig. 3: einen Schnitt aus A-B entsprechend Fig. 2 durch die äußere Nockenscheibe,
- Fig. 4: eine Seitenansicht der äußeren Nockenscheibe von Fig. 2,
- Fig. 5: eine Abwicklung der Umfangsfläche der äußeren Nockenscheibe gemäß Fig. 4,
- Fig. 6: eine stirnseitige Ansicht der inneren Nockenscheibe aus Richtung II von Fig. 1,
- Fig. 7: einen Schnitt A-B von Fig. 6 durch die innere Nockenscheibe;
- Fig. 8: eine Seitenansicht der inneren Nockenscheibe nach Fig. 6,
- Fig. 9: eine Abwicklung der Außenumfangsfläche der inneren Nockenscheibe gemäß Fig. 8,
- Fig. 10: eine Seitenansicht des Verschlußbolzens von Fig. 1,
- Fig. 11: (demgegenüber vergrößert) einen Schnitt A-A von Fig. 10 durch den Verschlußbolzen (ohne Darstellung des Bolzenkopfes), und
- Fig. 12a bis 12c: verschiedene Kombinationen von Bauteilen, welche mit dem erfindungsgemäßen Drehverschluß miteinander verbunden werden können.

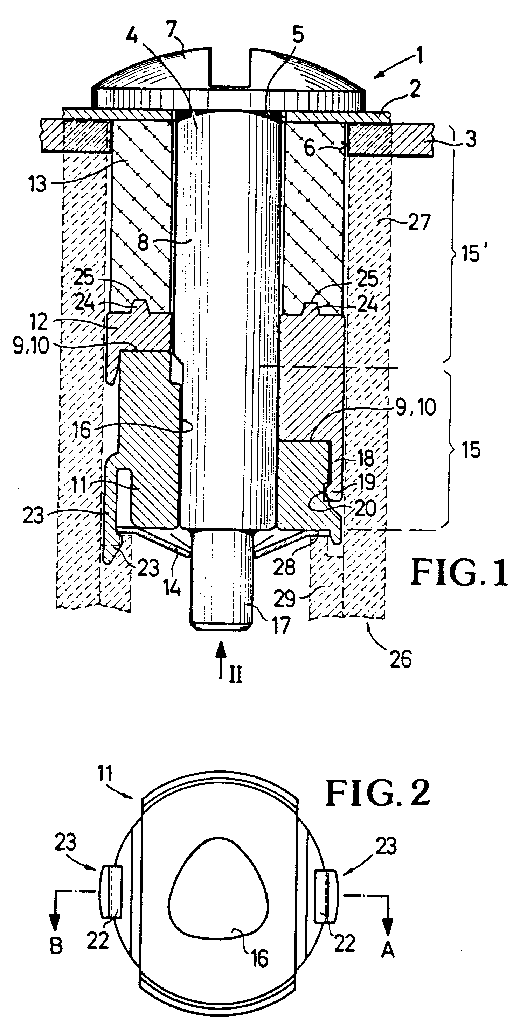

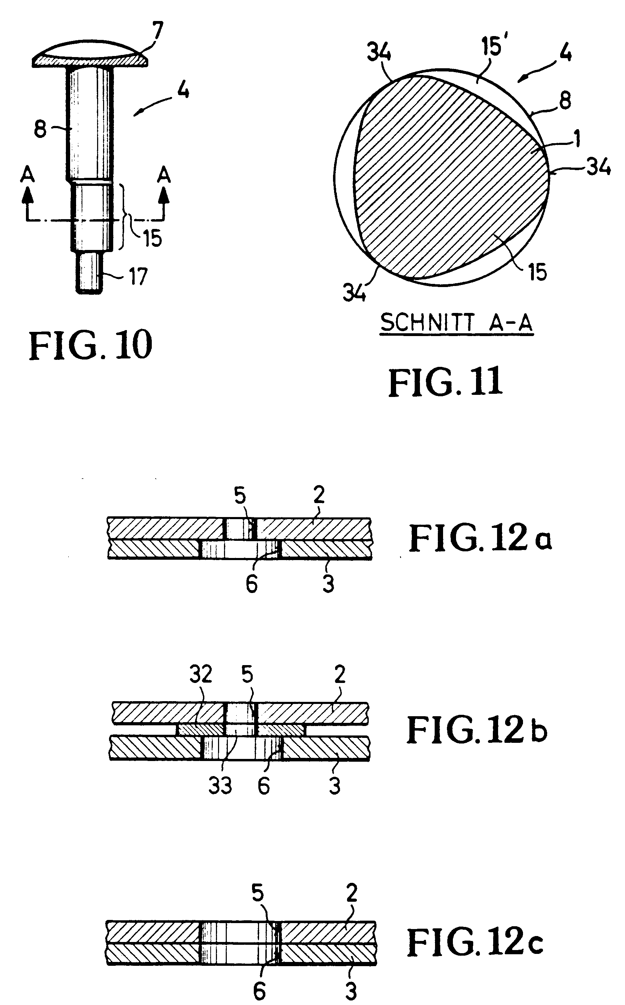

Der erfindungsgemäße Drehverschluß 1 gemäß Fig. 1 dient zur Verbindung eines äußeren Bauteils 2 mit einem inneren Bauteil 3 in einer Festverbindung. Zu diesem Zweck hat das äußere Bauteil 2 ein Loch 5 und das innere Bauteil 3 ein größeres Loch 6. Der Durchmesser des Loches 5 des äußeren Bauteils 2 ist so bemessen, daß ein Verschlußbolzen 4 mit seinem Bolzenschaft 8 so weit durch das Loch 5 hindurchgesteckt werden kann, bis der in diesem Fall als Schlitzkopf ausgebildete Bolzenkopf 7 mit seiner Unterseite auf der Außenseite des äußeren Bauteils 2 anliegt. Auf dem durch das Loch 5 hindurchragenden Bolzenschaft 8 befindet sich angrenzend an die Innenseite des äußeren Bauteils 2 eine Klemmhülse 13 aus elastischem Material, deren Durchmesser nahezu dem Durchmesser des Loches 6 in dem inneren Bauteil 3 entspricht. Die Klemmhülse 13 hat auf ihrer dem Bolzenkopf 7 abgewandten Stirnseite Vertiefungen 25, in welche eine ebenfalls auf dem Bolzenschaft 8 aufgenommene innere Nockenscheibe 12 mit Vorsprüngen 24 eingreift. Die z.B. spitz ausgebildeten Vorsprünge 24 können sich auch unter Vorspannung in das elastische Material der Klemmhülse 13 eindrücken und dadurch die Vertiefungen 25 bilden. An die innere Nockenscheibe 12 schließt sich eine äußere Nockenscheibe 11 an. Die beiden Nockenscheiben 11 und 12 laufen über Nockenflächen 9 und 10 aufeinander ab. Diese bestehen aus jeweiligen Schrägflächen in Kombination mit einem Rastvorsprung 30 und einer Rastvertiefung 31, welche in der Rastverschlußstellung des Drehverschlusses 1 ineinandergreifen. Die äußere Nockenscheibe 11 stützt sich mit ihrer äußeren Stirnfläche an einem selbstklemmenden Federring (Benzing-Ring) 14 ab, welcher auf den äußeren zylindrischen Endabschnitt 17 des Bolzenschafts 8 aufgeschoben ist. Der Bolzenschaft 8 ist im Bereich der Klemmhülse 13 und der inneren Nockenscheibe 12 sowie in seinem Endabschnitt 17 zylindrisch, im Bereich der äußeren Nockenscheibe 11 hat er jedoch einen im Querschnitt unrunden, vorzugsweise polygonalen Abschnitt 15 (vgl. Fig. 11), welcher formschlüssig in eine entsprechend unrund gestaltete Durchbrechung 16 (vgl. Fig. 2) der äußeren Nockenscheibe 11 eingreift. Beim Drehen des Verschlußbolzens 4 wird dadurch die äußere Nockenscheibe 11 zuverlässig mitgedreht. Gemäß Fig. 1 und 11 haben der Abschnitt 15 mit unrundem Querschnitt und der sich zum Bolzenkopf 7 anschließende zylindrische Abschnitt 15′ des Bolzenschafts 8 partielle Umfangsbereiche 34 mit gleichem Durchmesser zur Führung der Nockenscheiben 11 und 12. Dadurch laufen die beiden Nockenscheiben 11 und 12 über ihre Nockenflächen 9 und 10 präzise aufeinander ab. Da die äußere Nockenscheibe 11 wegen des Federrings 14 axial nach außen nicht ausweichen kann, werden die axialen Kräfte über die nicht mitgedrehte innere Nockenscheibe 12 auf die vom Bolzenkopf 7 wegweisende Stirnfläche der Klemmhülse 13 übertragen. Diese baucht sich dadurch nach außen unter Bildung eines Klemmwulstes benachbart der Innenseite des inneren Bauteils 3 aus, so daß der innere Bauteil 3 an dem äußeren Bauteil 2 festgeklemmt wird.

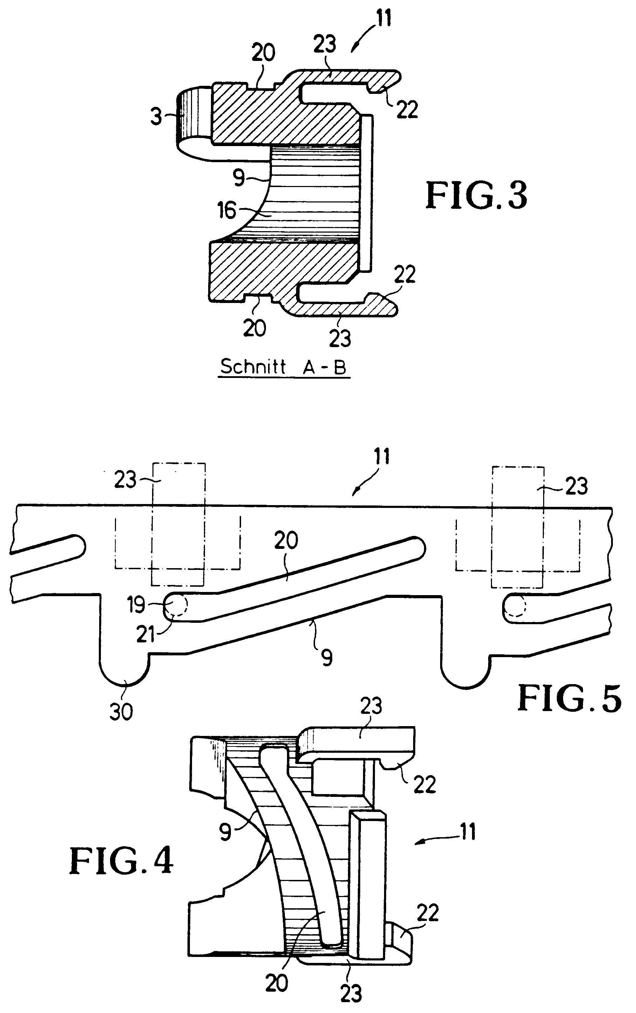

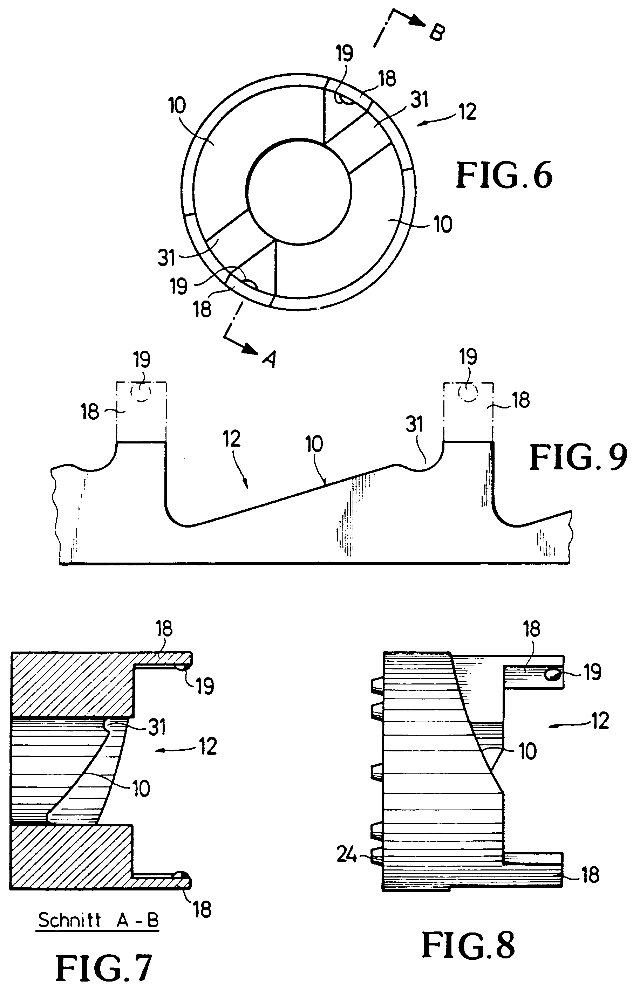

Die beiden Nockenscheiben 11 und 12 sind miteinander verrastet, und zwar über zwei diametral einander gegenüberliegende axial am äußeren Umfang von der inneren Nockenscheibe 12 in Richtung der äußeren Nockenscheibe 11 weisenden Rastzungen 18, welche auf der Innenseite ihrer äußeren Enden Rastnasen 19 tragen. Wie insbesondere aus den Fig. 4 und 5 ersichtlich, weist die äußere Nockenscheibe 11 auf ihrem Außenumfang zwei ebenfalls diametral einander gegenüberliegende Nuten 20 auf, welche im wesentlichen parallel zu den Nockenflächen 9 und 10 der Nockenscheiben 11 und 12 verlaufen. Beim Verdrehen der Nockenscheiben 11 und 12 gegeneinander werden die Rastzungen 18 mit ihren Rastnasen 19 in den Nuten 20 mitgeführt und gelangen schließlich in ihre Endstellung 21 (vgl. Fig. 5) am Ende der jeweiligen Nut 20. Obwohl die beiden Nockenscheiben 11 und 12 gegeneinander verdrehbar und gegeneinander axial verschiebbar sind, bilden sie dadurch dennoch eine Baueinheit, welche bei der Montage des Drehverschlusses vor Ort einfach zu handhaben ist. Darüberhinaus kann die Klemmhülse 13 mit der inneren Nockenscheibe 12, bspw. durch Verkleben und/oder durch axialen Formschluß, verbunden sein. Außerdem ist, wie aus Fig. 1 ersichtlich, der Federring 14 an seinem Außenumfang mittels zweier diametral einander gegenüberliegender Haltenasen 22 stirnseitig an der äußeren Nockenscheibe 11 gehalten, wobei die Haltenasen 22 auf der Innenseite des axial äußeren Endes von entsprechenden Haltezungen 23 angeordnet sind, welche axial über die äußere Stirnseite der äußeren Nockenscheibe 11 hinausragen (Fig. 3 und 4). Ebenso wie die Rastzungen 18 der inneren Nockenscheibe 12 (Fig. 7 und 8) können auch die Haltezungen 23 der äußeren Nockenscheibe 11 nach außen elastisch ausweichen, so daß die durch diese Elemente gebildeten Baueinheiten jeweils einfach vormontiert werden können. Die so geschaffene Baueinheit aus Klemmhülse 13, innerer Nockenscheibe 12 äußerer Nockenscheibe 11 und Federring 14 kann bei Montage des Drehverschlusses vor Ort als Ganzes auf den Bolzenschaft 8 des Verschlußbolzens 4 aufgeschoben werden, nachdem dieser durch das Loch 5 des äußeren Bauteils 2 gesteckt worden ist. Der Montagevorgang ist dadurch so vereinfacht, daß er bspw. auch von einem Automaten, also maschinell, vorgenommen werden kann, wobei durch einen einzigen Aufsteckvorgang sämtliche Einzelteile der Baueinheit auf den Bolzenschaft 8 aufgeschoben und mittels des Federrings 14 gemeinsam in ihrer richtigen Position auf dem Bolzenschaft festgelegt und festgehalten werden.

Ein solcher Montageautomat kann bspw. ein Montagewerkzeug haben, wie es in Fig. 1 mit gestrichelten Linien dargestellt ist. Das Montagewerkzeug hat einen Montagekopf 26, der bspw. magnetisch sein kann, so daß die gesamte Baueinheit aus Klemmhülse 13, innerer Nockenscheibe 12, äußerer Nockenscheibe 11 und metallischem Federring 14 von ihm aufgenommen und gehalten werden kann. Diese Baueinheit ist verhältnismäßig leicht, da die Klemmhülse 13 bspw. aus Gummi und die beiden Nockenscheiben 11 und 12 bspw. aus Kunststoff bestehen können, welcher ein gutes Gleiten der Nockenscheiben 11 und 12 aufeinander gewährleistet, während der Federring 14 für die magnetische Halterung metallen ist. Eine so von dem Montagekopf 26 ergriffene Baueinheit kann mittels des Montagewerkzeugs auf den Bolzenschaft 8 aufgeschoben werden, indem die Stirnseite einer Innenhülse 29 des Montagekopfes 26 auf den äußeren Umfangsrand 28 der Federscheibe 14 drückt. Das Aufschieben der Baueinheit ist so weit möglich, bis eine Außenhülse 27 des Montagekopfes 26 (bei noch nicht aufgehobenem inneren Bauteil 3) an der Innenseite des äußeren Bauteils 2 anschlägt. Der Abstand der Stirnfläche der Innenhülse 29 und der Stirnfläche der Außenfläche 27 ist gerade so bemessen, daß dann der Federring 14 seine richtige axiale Position auf dem verjüngten zylindrischen Endabschnitt 17 des Bolzenschafts 8 einnimmt. Der axiale Abstand dieser beiden Stirnflächen ist in diesem Falle gerade so groß wie die axiale Länge der Baueinheit aus Klemmhülse 13, Nockenscheiben 11, 12 und Federring 14 im Bereich des äußeren Umfangrandes 28 des Federrings 14. Insbesondere kann ein solches Montagewerkzeug auch bei den unterschiedlichen Materialverbindungen eingesetzt werden, wie sie in den Fig. 12a bis 12c schematisch veranschaulicht sind. Gemäß Fig. 12a ist der Durchmesser des Loches 5 des äußeren Bauteils 2 wie bei Fig. 1 kleiner als der Durchmesser des Loches 6 des inneren Bauteils 3. Dabei entspricht der Durchmesser des Loches 5 dem Durchmesser des Bolzenschafts 8 im Anschluß an den Bolzenkopf 7, während der Durchmesser des Loches 6 dem Außendurchmesser der Klemmhülse 13 entspricht. Diese Konstellation führt zu einer Unverlierbarkeit des Verschlußbolzens 4 an dem äußeren Bauteil 2. Bei Fig. 12b liegen die gleichen Größenverhältnisse bezüglich der Durchmesser der Löcher 5 und 6 vor. Zwischen den beiden Bauteilen 2 und 3 ist jedoch ein Dichtring 32 eingelegt, deren Mittelloch einen Durchmesser hat, der dem Durchmesser des Loches 5 des äußeren Bauteiles 2 entspricht. Diese Konstallation führt zu einer abgedichteten Verbindung, da die beiden Bauteile 2 und 3 entsprechend der Materialbeschaffenheit des Dichtringes 32 gegeneinander abgefedert und abgedichtet werden. Während bei den Ausführungsbeispielen gemäß den Fig. 1, 12a und 12b der Drehverschluß 1 bereits an dem äußeren Bauteil 2 vormontiert sein kann, bevor das innere Bauteil 3 mit seinem größeren Loch 6 über den Drehverschluß 1 geschoben und dieser dann in seine Verschlußstellung gedreht wird, kann der Drehverschluß 1 bei der Konstallation gemäß Fig. 12c, bei welcher die Löcher 5 und 6 der Bauteile 2 und 3 gleichen Durchmesser haben, nicht unverlierbar an dem äußeren Bauteil 2 gehalten werden. In diesem Falle stützt sich die Klemmhülse 13 mit ihrer äußeren Stirnfläche nicht auf der Innenseite des äußeren Bauteils 2, sondern auf der Unterseite des Bolzenkopfes 7 ab, wenn die äußere Nockenscheibe 11 gegenüber der inneren Nockenscheibe 12 verdreht und dadurch die Klemmhülse 13 unter Bildung eines Klemmwulstes axial zusammengedrückt wird, um auch in diesem Falle die beiden Bauteile 2 und 3 sicher zusammenzuklemmen.

Während Fig. 9 den Verschlußbolzen 4 ebenso wie in Fig. 1 mit einem Schlitzkopf veranschaulicht ist, können selbstverständlich die unterschiedlichsten Betätigungsköpfe für einen solchen Verschlußbolzen 4 verwendet werden, wozu insbesondere auch die unterschiedlichsten Arten von Flügel-, Sterngriff-und Rändelköpfen, welche von Hand betätigbar sind, gehören.

### Bezugszeichenliste:

- 1: Drehverschluß
- 2: äußeres Bauteil
- 3: inneres Bauteil
- 4: Verschlußbolzen
- 5: Loch
- 6: Loch
- 7: Bolzenkopf
- 8: Bolzenschaft
- 9: Nockenfläche
- 10: Nockenfläche
- 11: äußere Nockenscheibe
- 12: innere Nockenscheibe
- 13: Klemmhülse
- 14: Federring (Benzing-Ring)
- 15: Abschnitt
- 15′: Abschnitt
- 16: Durchbrechung
- 17: Endabschnitt
- 18: Rastzunge
- 19: Rastnase
- 20: Nut
- 21: Endstellung
- 22: Haltenasen
- 23: Haltezungen
- 24: Vorsprünge
- 25: Vertiefungen
- 26: Montagekopf
- 27: Außenhülse
- 28: Umfangsrand
- 29: Innenhülse
- 30: Rastvorsprung
- 31: Rastvertiefung
- 32: Dichtring
- 33: Mittelloch
- 34: Umfangsbereiche

## Patentansprüche

1. Drehverschluß, insbesondere Vierteldrehverschluß, für das Verbinden z.B. plattenförmiger Bauteile (2, 3), mit einem Verschlußbolzen (4), welcher durch zueinander fluchtende Löcher (5, 6) der zu verbindenden Bauteile (2, 3) zu führen und mit seinem Bolzenkopf (7) auf die Außenseite des äußeren Bauteils (2) anzulegen ist, sowie mit zwei auf dem Bolzenschaft (8) aufgenommenen und mit ihren Nockenflächen (9, 10) aufeinander und relativ zueinander bis in eine Rastverschlußstellung verdrehbaren Nockenscheiben (11, 12), von welchen die äußere Nockenscheibe (11) radial und durch äußere Abstützung auf einem an dem Bolzenschaft (8) festgelegten Federring (14) axial gegenüber dem Bolzenschaft (8) festgelegt ist und sich die innere Nockenscheibe (12) bei Relativverdrehung der Nockenscheiben (11, 12) zueinander axial in Richtung des Bolzenkopfes (7) bewegt und dabei axial auf eine auf dem Bolzenschaft (8) aufgenommene Klemmhülse (13) aus elastischem Material einwirkt, welche sich dadurch nach außen unter Bildung eines Klemmwulstes benachbart der Innenseite des inneren Bauteils (3) ausbaucht, dadurch gekennzeichnet, daß der Bolzenschaft (8) einen zylindrischen Endabschnitt (17) für die Aufnahme des Federrings (14) hat, daß der Federring (14) unter elastischem Ausweichen von nach innen gestellten Federzungen auf den zylindrischen Endabschnitt (17) aufgeschoben und dadurch selbstklemmend auf den zylindrischen Endabschnitt (17) gegen ein Abziehen gehalten ist, sowie daß wenigstens die beiden gegeneinander bewegbaren Nockenscheiben (11, 12) zu einer Baueinheit z.B. lösbar untereinander verbunden, vorzugsweise miteinander verrastet, und als solche vormontiert auf den Bolzenschaft (8) aufschiebbar sind und/oder daß wenigstens die äußere Nockenscheibe (11) und der Federring (14) zu einer Baueinheit untereinander verbunden, vorzugsweise miteinander verrastet, sind.

2. Drehverschluß nach Anspruch 1, dadurch gekennzeichnet, daß die Verrastung der beiden Nockenscheiben (11, 12) zu einer Baueinheit wenigstens eine an der einen der Nockenscheiben (11, 12) vorgesehene, vorzugsweise radial elastisch ausweichende Rastzunge (18) aufweist, welche mit einer Rastnase (19) in eine an der anderen der Nockenscheiben (11, 12) vorgesehenen Nut (20) geführt ist, welche im wesentlichen parallel zu der Nockenfläche (9) ihrer Nockenscheibe (11) verläuft.

3. Drehverschluß nach Anspruch 1, dadurch gekennzeichnet, daß der Federring (14) von wenigstens zwei diametral einander gegenüberliegenden, vorzugsweise radial elastisch ausweichenden und mit einer Haltenase (22) versehenen Haltezungen (23) am axial äußeren Ende der äußeren Nockenscheibe (11) eingefangen ist.

4. Drehverschluß nach einem der Ansprüche 1 bis 3, dadurch gekennzeichnet, daß wenigstens die Klemmhülse (13) und die innere Nockenscheibe (12), zum Beispiel durch Kleben und/oder Formschluß, zu einer Baueinheit untereinander verbunden sind.

5. Drehverschluß nach einem der Ansprüche 1 bis 4, dadurch gekennzeichnet, daß die innere Nockenscheibe (12) mit Vorsprüngen (24) in Vertiefungen (25) der Klemmhülse (13) formschlüssig hineinragt.

6. Drehverschluß nach einem der Ansprüche 1 bis 5, dadurch gekennzeichnet, daß der Bolzenschaft (8) im Anschluß an den zylindrischen Endabschnitt (17) und im Bereich der äußeren Nockenscheibe (11) einen Abschnitt (15) mit unrundem Querschnitt hat, welcher formschlüssig in eine Durchbrechung (16) der äußeren Nockenscheibe (11) mit entsprechend unrundem Querschnitt paßt.

7. Drehverschluß nach Anspruch 6, dadurch gekennzeichnet, daß der Abschnitt (15) mit unrundem Querschnitt und der sich zum Bolzenkopf (7) anschließende zylindrische Abschnitt (15') des Bolzenschafts (8) partielle Umfangsbereiche (34) mit gleichem Durchmesser zur Führung der Nockenscheiben (11, 12) haben.

## Claims

1. Turn-lock fastener, in particular quarter-turn fastener, for the connection of, for example, plate-shaped components (2, 3), having a locking bolt (4), which is to be guided through aligned holes (5, 6) of the components (2, 3) which are to be connected and the bolt head (7) of which is to be laid against the outside of the outer component (2), and also having two cam discs (11, 12) which can be received on the bolt shaft (8) and can be twisted with their cam surfaces (9, 10) one on top of the other and relative to each other until in a latched locked position, of which the outer cam disc (11) is fixed radially and by means of external support on a spring ring (14), fixed on the bolt shaft (8), axially in respect of the bolt shaft (8) and the inner cam disc (12) of which is moved, given relative torsion of the cam discs (11, 12) in respect of each other, axially in the direction of the bolt head (7) and thereby acts axially on a clamping sleeve (13) which is received on the bolt shaft (8) and is made of elastic material, which sleeve as a result of the action bulges outwards forming a clamping bead adjacent to the inside of the inner component (3), characterised in that the bolt shaft (8) has a cylindrical end section (17) for the accommodation of the spring ring (14), in that the spring ring (14) is slid onto the cylindrical end section (17) with elastic deflection of inwardly set spring tongues and is held as a result in a self-clamping manner on the cylindrical end section (17), prevented against being pulled off, and also in that at least the two cam discs (11, 12) which can be moved in respect of each other are, for example, connected with each other in a detachable manner, preferably latched with each other, to form a structural unit and as such, pre-assembled, can be slid onto the bolt shaft (8) and/or in that at least the outer cam disc (11) and the spring ring (14) can be connected with each other, preferably latched with each other, to form a structural unit.

2. Turn-lock fastener according to claim 1, characterised in that the latched connection of the two cam discs (11, 12) to form a structural unit has at least one stop tongue (18) which is provided on one of the cam discs (11, 12) and preferably deflects radially elastically, which tongue is guided with a stop lug (19) into a groove (20) which is provided on the other cam disc (11, 12) and extends so as to be substantially parallel to the cam surface (9) of its cam disc (11).

3. Turn-lock fastener according to claim 1, characterised in that the spring ring (14) is caught by at least two diametrically opposed holding tongues (23), which deflect preferably radially elastically and are provided with a holding lug (22), at the axially outer end of the outer cam disc (11).

4. Turn-lock fastener according to one of the claims 1 to 3, characterised in that at least the clamping sleeve (13) and the inner cam disc (12) are connected with each other, for example by gluing and/or form-closure, to form a structural unit.

5. Turn-lock fastener according to one of the claims 1 to 4, characterised in that the inner cam disc (12) projects with projections (24) in a form-closing manner into recesses (25) of the clamping sleeve (13).

6. Turn-lock fastener according to one of the claims 1 to 5, characterised in that the bolt shaft (8), following on from the cylindrical end section (17) and in the region of the outer cam disc (11), has a section (15) with a non-circular cross section which fits in a form-closing manner into an opening (16) of the outer cam disc (11) having a correspondingly non-circular cross section.

7. Turn-lock fastener according to claim 6, characterised in that the section (15) with non-circular cross section and the cylindrical section (15') of the bolt shaft (8) connected to the bolt head (7) have partial peripheral areas (34) with equal diameter for the purpose of guiding the cam discs (11, 12).

## Revendications

1. Attache verrouillante, notamment attache quart de tour pour assembler par exemple des éléments (2, 3) en forme de plaques, comportant un verrou (4) que l'on engage dans des trous (5, 6) mutuellement alignés des éléments (2, 3) à assembler et qui, par sa tête (7), est appliqué sur la face extérieure de l'élément extérieur (2) ainsi que deux disques à cames (11, 12) qui sont montés sur la tige (8) de verrou et peuvent tourner avec leur surfaces de cames (9, 10) l'un sur l'autre et l'un par rapport à l'autre jusqu'à une position de verrouillage par encliquetage, parmi lesquels le disque à came (11) extérieur est immobilisé par rapport à la tige (8) de verrou radialement et axialement par appui extérieur sur une rondelle élastique (14) fixée sur la tige (8) de verrou et, lors de la rotation relative des disques à cames (11, 12), le disque à came (12) intérieur se déplace axialement en direction de la tête (7) de verrou et agit axialement sur un manchon de serrage (13) en matériau élastique monté sur la tige (8) de verrou, qui se déforme en direction de l'extérieur en formant un bourrelet de serrage au voisinage de la face intérieure de l'élément (3) intérieur, caractérisé par le fait que la tige (8) de verrou comporte un partie (17) terminale cylindrique qui reçoit la rondelle élastique (14), par le fait que la rondelle élastique (14) est enfilée sur la partie (17) terminale cylindrique par écartement élastique de languettes élastiques tournées vers l'intérieur et ainsi est fixée par autoblocage sur la partie (17) terminale cylindrique, par le fait qu'au moins les deux disque à cames (11, 12) mobiles l'un par rapport à l'autre sont liés entre eux par exemple avec possibilité de démontage pour former une unité de montage, de préférence sont encliquetés l'un dans l'autre, et peuvent être enfilés ainsi montés sur la tige (8) de verrou et/ou par le fait qu'au moins le disque à came (11) extérieur et la rondelle élastique (14) sont liés entre eux pour former une unité de montage, de préférence sont encliquetés l'un dans l'autre.

2. Attache verrouillante selon la revendication 1, caractérisée par le fait que le moyen d'assemblage par encliquetage des deux disques à cames (11, 12) pour former une unité de montage présente au moins une languette (18) qui est prévue sur l'un des disques à came (11, 12), s'écarte de préférence élastiquement dans la direction radiale et, par un nez d'encliquetage (19), pénètre dans une rainure (20) qui est prévue dans l'autre disque à cane (11, 12) et s'étend sensiblement parallèlement à la surface de came (9) dudit disque à came (11).

3. Attache verrouillante selon la revendication 1 caractérisée par le fait que la rondelle élastique (14) est montée prisonnière à l'extrémité axialement extérieure du disque à came (11) extérieur par l'intermédiaire d'au moins deux languettes (23) diamétralement opposées qui de préférence s écartent élastiquement dans la direction radiale et sont pourvues d'un nez d'encliquetage (22).

4. Attache verrouillante selon l'une des revendication 1 à 3, caractérisée par le fait qu'au moins le manchon de serrage (13) et le disque à came (12) intérieur sont liés entre eux par collage et/ou par complémentarité de forme pour former une unité de montage.

5. Attache verrouillante selon l'une des revendication 1 à 4, caractérisée par le fait que le disque à came (12) intérieur pénètre par complémentarité de forme par des saillies (24) dans des cavités (25) du manchon de serrage (13).

6. Attache verrouillante selon l'une des revendication 1 à 5, caractérisée par le fait que la tige (8) de verrou présente, à la suite de la partie terminale (17) cylindrique et dans la région du disque à came (11) extérieur, une partie (15) à section non ronde qui s'adapte par conjugaison de forme dans une ouverture (16) à section adaptée non ronde du disque à came (11) extérieur.

7. Attache verrouillante selon la revendication 6, caractérisée par le fait que la partie (15) à section non ronde et la partie (15') cylindrique de la tige (8) de verrou qui se raccorde à la tête (7) de verrou comportent des zones (34) partielles de la circonférence de même diamètre destinées au guidage des disques à cames (11, 12).
